(19) Europäisches Patentamt

European Patent Office

Office européen des brevets

(11) **EP 1 378 980 B1**

(12) **EUROPEAN PATENT SPECIFICATION**

(45) Date of publication and mention
of the grant of the patent:
**16.02.2005 Bulletin 2005/07**

(51) Int Cl.⁷: **H02H 7/12**, H02M 3/155

(21) Application number: **02014878.9**

(22) Date of filing: **04.07.2002**

(54) **DC power supply unit for consumer electronic products**

Gleichstromversorgungseinheit für elektronische Endverbraucherprodukte

Alimentation à courant continu pour des produits electroniques de consommateurs

(84) Designated Contracting States:
**DE GB**

(43) Date of publication of application:
**07.01.2004 Bulletin 2004/02**

(73) Proprietor: **Vestel Elektronik Sanayi ve Ticaret A.S.**
**45030 Manisa (TR)**

(72) Inventors:
• **Demiryurekli, Okyay**
**45030 Manisa (TR)**
• **Aytac, Cihat**
**45030 Manisa (TR)**

(74) Representative: **HOFFMANN - EITLE**
**Patent- und Rechtsanwälte**
**Arabellastrasse 4**
**81925 München (DE)**

(56) References cited:
WO-A-98/34261          US-A- 5 784 231
US-B1- 6 229 681

• PATENT ABSTRACTS OF JAPAN vol. 1999, no. 08, 30 June 1999 (1999-06-30) & JP 11 069785 A (HITACHI LTD), 9 March 1999 (1999-03-09)
• PATENT ABSTRACTS OF JAPAN vol. 1999, no. 11, 30 September 1999 (1999-09-30) & JP 11 149320 A (HITACHI HOMETEC LTD), 2 June 1999 (1999-06-02)
• PATENT ABSTRACTS OF JAPAN vol. 1997, no. 06, 30 June 1997 (1997-06-30) & JP 09 051670 A (HITACHI LTD), 18 February 1997 (1997-02-18)

**Description**

## FIELD OF THE INVENTION

The invention relates to a power DC power supply unit providing a DC voltage for an electrical apparatus and having a failure condition detection function. Typically, the electrical apparatus is a consumer electronic product where product safety is a concern.

In particular, excessive currents and voltages caused by faulty components of the electrical apparatus is a product safety concern since this may lead to fire and electric shock hazards. Such failure conditions are typically caused by short-circuits or open circuits at particular positions in the circuitry of the DC power supply unit or elsewhere in the circuitry of the electrical apparatus.

Thus, generally one desire of the present invention is to provide a DC power supply unit allowing a correct and efficient detection of failure conditions such as excessive currents and voltages in the circuitry of the DC power supply unit or elsewhere in the circuitry of the electrical apparatus.

## BACKGROUND OF THE INVENTION

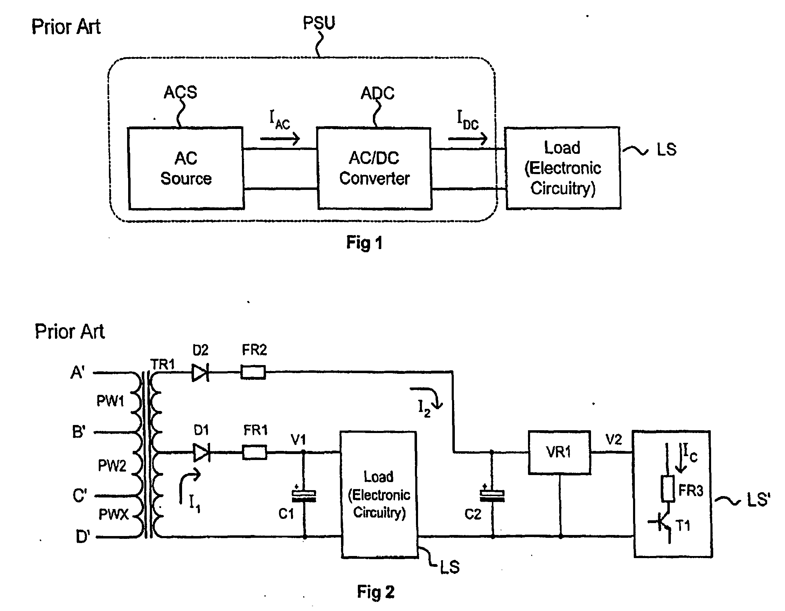

Fig. 1 shows a block diagram of a conventional power supply unit PSU providing a current $I_{DC}$ to an electrical apparatus or more generally to a load circuitry LS. The load circuitry LS can be typically a consumer electronic product such as the circuitry of a TV receiver, a DVD player, a DVB player, a PC monitor or a Video cassette player. A typical feature in such electronic apparatus is the so-called stand-by operation mode in which the electrical apparatus switches to a stand-by mode during which some stand-by currents flow in the respective circuitry. This may cause an electric shock or a fire hazard and thus great concern for the product safety. Therefore excessive voltages and/or currents flowing in certain conditions, such as in the stand-by mode, must be correctly and efficiently detected. As already mentioned above, one of the causes of abnormal conditions, in the normal operation mode, is that faulty electronic components may cause short-circuits or open circuits for which the circuitry was not designed at the design stage.

For example, in a TV receiver excessive currents and voltages caused by faulty components may reach such high levels that they may lead to fire or electric shock hazards which must be prevented under all circumstances as part of the product safety requirements in the normal operation of the product. For example, the current drawn by a 28'' TV receiver is 0.5 Amps under normal operation conditions and the TV receiver is designed to draw 1 mA in stand-by mode. In case an abnormal condition occurs during such a normal operation of the TV product, this may cause an increase of the current from 0.5 Amps to much higher levels resulting in a fire-hazard.

For example, in Fig. 1 the temperature of the AC source ACS and the AC/DC converter ADC of the DC power supply unit PSU should remain below certain critical temperature limits as long as the current of the rated value $I_{AC}$ (alternating current) and/or $I_{DC}$ (direct current) is flowing. Thus, there must be a failure condition detection function which provides sufficient protection to avoid excessive current amounts $I_{AC}$, $I_{DC}$. For example, a faulty component in the AC/DC converter ADC and/or in the actual electrical equipment or in the load circuitry LS in Fig. 1 can cause the alternating current $I_{AC}$ and or the direct current $I_{DC}$ to flow in excessive amounts. An excessive value of $I_{AC}$ and $I_{DC}$ can cause the temperature of the AC source ACS and/or the AC/DC converter ADC to reach critical temperature values which cause a fire hazard.

Therefore, typically failure condition detection functions and/protection circuits or components must be used in the DC power supply unit to avoid the overheating problem, as will be explained below with respect to Fig. 2.

## Fusing Resistors Overheating Protection

In Fig. 2 an AC Power source ACS comprises an AC step-down transformer TR1 with several primary windings PW1, PW2, PWX and two secondary windings SW1, SW2. An AC voltage is supplied to the respective input terminals A', B', C', D' of the primary windings. The AC power source ACS also comprises a first rectifier diode D1 for a DC voltage V1 and a second rectifier diode D2 to generate the DC voltage V2.

Furthermore, a first and second smoothing capacitor C1, C2 is provided. Through the first diode D1 a first current $I_1$ is taken out and through the second diode D2 another current $I_2$ is taken out and is provided to a voltage regulating circuitry VR1, which is used to obtain a stable DC voltage V2 across the electronic circuitry incorporating components such as a transistor T1. Both the electronic circuitries LS, LS' need to be provided with power from the AC power source ACS and to avoid excessive levels of current $I_1$, $I_2$, $I_C$ a first, second and third fusing resistor FR1, FR2 and FR3 are respectively provided between the first diode D1 and the load circuitry LS, between the second diode D2 and the voltage regulator circuit VR1 and in the collector path of the transistor T1. It should be understood that the load circuitry LS' is representing many different elements and circuit portions of the electrical apparatus and therefore there may be more than one third fusing resistor FR3 in the electronic circuitry LS' at appropriate circuit portions. Critical electronic components which may cause normal conditions in such an electrical circuit can be diodes, capacitors, voltage regulators, transformers or, as shown in Fig. 2, transistors such as the transistor T1. As explained above, these components may either constitute an open circuit or a short circuit when they go faulty.

For example, in Fig. 2 the level of $I_1$ would increase to an excessive level, if the first capacitor C1 goes faulty and acts like a short circuit component. The current $I_1$ flowing in an excessive amount may heat up the transformer T1 and the first diode D1. This would likewise apply if the second capacitor C2 acts as a faulty short-circuit component because the current $I_2$ would reach an excessive level.

On the other hand, if in Fig. 2 the voltage regulator VR1 goes faulty, the potential V2 would increase and cause components such as the transistor T1 to heat up to critical temperature.

Furthermore, if the first or second diode D1, D2 goes faulty, they may act as a short-circuit and this can also cause increased levels of the currents I1 and I2, respectively.

Another fault condition which may occur is a failure condition in the transformer TR1 itself, for example, that some of the terminals in the primary winding such as B'-C' in Fig. 2 may be shortened due to mechanical failure. In such a case the potential in the secondary winding SW1, SW2 would increase to a level depending on the number of turns in the shortened windings PW2. In Fig. 2 the shortened terminals B'-C' would for example cause increased currents $I_1$, $I_2$.

To avoid such failure conditions the fusing resistors FR1, FR2, FR3 which go from an ON state to an OFF state in response to excessive currents flowing through them are used as a protection component for avoiding excessive currents.

The construction of such fusing resistors is for example described in WO 98/34 261.

In Fig. 2 the fusing resistor FR1 must be chosen to fuse off (go into an OFF state or OPEN state) as a result of an excessive current $I_1$ and the fusing resistor FR2 must be chosen to fuse off due to excessive levels of $I_2$. The fusing resistor FR3 can be chosen to fuse off with an excessive level of current $I_C$.

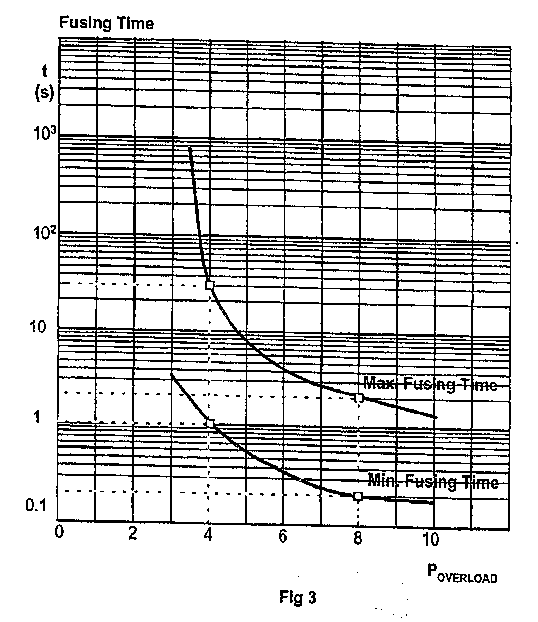

Generally, the use of fusing resistors acting as a fuse is a reliable protection against excessive currents as long as their fusing characteristics do not exhibit a significant variance for any single type of fusing resistor. However, as shown in Fig. 3, showing the fusing time versus the overload power $P_{OVERLOAD}$, indeed the fusing characteristics of the fusing resistor are not independent from the handled power. In particular, the fusing characteristics of a fusing resistor does not indicate an ON to OFF transition always at a specific value of power dissipation, but it exhibits a wide range of fusing time depending on the amount the power dissipation. For example, if the power dissipation has a normalized value of 4, the maximum fusing time may be about 60 s and the minimum fusing time may be 1 s whereas at the power dissipation of an normalized value 8 the maximum fusing time is only about 3 s and the minimum fusing time is about 0.2 s.

Additionally, the maximum and minimum fusing time at specific power dissipation is significantly variant from component to component. Additionally, the duration for the fusing resistor to pass to the OFF state from the ON state is not a predetermined duration and is dependent on the power dissipation of the fusing resistor itself, as shown in Fig. 3.

Thus, as is apparent from Fig. 3, the wide range between the maximum fusing time curve and the minimum fusing time curve is the main disadvantage with using the fusing resistors to maintain product safety and product reliability. If one chooses to maintain product safety and limit the maximum fusing time to 1 s, a current in a fault condition causing a power dissipation at eight times the rated power of the fusing resistor will cause some fusing resistors to fuse off in 2*0.1 s with the same power dissipation.

Considering that the first and second capacitor C1, C2 in Fig. 2 causes transit currents in high levels to flow through the fusing resistors FR1 and FR2, the fusing resistors are likely to transit from the ON state to the OFF state without occurrence of any fault conditions, which leads to a pure product reliability.

On the other hand, if one chooses to maintain product reliability by allowing transient currents to flow for 1 s at a power dissipation 4 times the rated power of the fusing resistor, then some of the fusing resistors are likely to fuse off in 20 s leading to a poor product safety. Furthermore, in addition to the above-mentioned disadvantages, the high temperature on the body of the fusing resistors in abnormal conditions can constitute also a potential fire hazard if they contact plastic enclosures of electronic components such as electrolytic caps provided on printed circuit boards or elsewhere in the load circuitry.

## SUMMARY OF THE INVENTION

As explained above, the variance between the curves for the maximum fusing time and the minimum fusing time of fusing resistors may lead to product reliability problems because fusing resistors may transit from an ON stage to an OFF state due to internal transient currents before the actual occurrence of an abnormal condition. Furthermore, high temperatures on the body of the fusing resistors before they transit to the OFF state from the ON state can also constitute a fire hazard.

Therefore, the present invention is aimed at providing a DC power supply unit including a failure condition detection function, which allows an accurate detection of failure conditions such as excessive currents and voltages without generating high temperature and without causing product reliability problems.

This object is solved by a DC power supply unit according to claim 1, providing a DC voltage for an electrical apparatus and having a failure condition detection function, comprising a DC power supply unit providing a DC voltage for an electrical apparatus and having a failure condition detection function, comprising at least a first cascade of a plurality of cascade-connected DC voltage supply sub-units each outputting a DC voltage with a predefined DC voltage level; said cascade-connected DC voltage supply sub-units being adapted such that the first DC voltage supply sub-unit of said cascade connection outputs the DC voltage with the highest DC voltage level, the succeeding DC voltage supply sub-units of said cascade connection output DC voltages respectively with successively decreasing DC voltage levels and the last DC voltage supply sub-unit of said cascade connection outputs the DC voltage with the lowest DC voltage level; at least one summation unit for summing up the highest DC voltage level and the lowest DC voltage level; and a failure condition detection unit for detecting a failure condition if said summed DC voltage differs from a predefined DC threshold voltage level more than a predetermined tolerance voltage. The invention provides electrical safety against excessive currents in normal operation of the product and can therefore, as an additional advantage, automatically switch the product at a correctly detected failure condition to the stand-by mode in which current drawn by the product is dramatically reduced.

One important further aspect of the invention is based on the fact that the duration of the transient currents is assumed to be known and the electrical apparatus is switched to stand-by mode if the duration of excessive currents is longer then the known duration of the transient currents in normal operation, i.e. when the summed up DC voltage differs from the predefined DC threshold voltage level more than a predetermined tolerance voltage for a time duration longer than the known time durations of transient currents.

Furthermore, this object is solved by an electrical apparatus (claim 11) comprising: a DC power supply unit as defined above; electronic circuitry including a plurality of circuit portions each driven by a particular one of said DC voltages output by said DC voltage supply sub-units; wherein said failure detection unit detects as a failure condition a short circuit in a electrical path in one or more of the circuit portions at the input or output of a DC voltage supply sub-unit.

Such a DC power supply unit and such an electrical apparatus is less likely to become defective during a normal use of the apparatus. Essentially, in accordance with the invention critical voltage levels at several test points are sampled wherein the sampled voltage levels are a function of the critical currents flowing in the respective circuitry. In particular, in accordance with the invention, a summing unit is used to monitor more than one test point in the circuitry. In accordance with the invention an improved product reliability and safety is achieved by monitoring the voltage variations in the test points. The variation caused by transient currents and steady state currents in a normal mode operation of the electrical apparatus is for example known. The voltage variations due to excess currents in abnormal conditions are also known. If such data is evaluated by the failure condition detection unit, the apparatus can either continue a normal operation or may be switched to a stand-by mode of operation by a system controller of the electrical apparatus.

One important further aspect of the invention is based on the fact that the duration of the transient currents is assumed to be known and the electrical apparatus is switched to stand-by mode if the duration of excessive currents is longer then the known duration of the transient currents in normal operation, i.e. when the summed up DC voltage differs from the predefined DC threshold voltage level more than a predetermined tolerance voltage for a time duration longer than the known time durations of transient currents.

Whilst fusing resistors reach high temperature levels with excessive current values before they fuse off, have to be serially connected on the circuit part carrying the rated steady-state current during the normal operation of the apparatus and thus must also dissipate power in the normal use, and may not be of a SMD type (Surface Mount Device), in a summation unit of the invention resistors serving to sum up the respective voltages can be constituted by surface mount devices which have a much lower price and lead to a cost reduction.

In addition, in accordance with the present invention only the faulty component has to be replaced and not additionally the fusing resistors which causes a reduced repair time. Whereas in the prior art a stock of fusing resistors must be provided, in accordance with the invention only the faulty component has to be provided. Thus, the present invention does not only provide an efficient failure detection, but also does so in an inexpensive manner and time-efficiently.

In accordance with a preferred embodiment of the invention the DC power supply unit comprises two cascades of cascade-connected DC voltage supply sub-units each being constituted as defined above, wherein said first cascade of DC voltage supply units outputs positive DC voltages with predefined positive DC voltage levels, said second cascade of DC voltage supply units outputs negative DC voltages with predefined negative DC voltage levels, said summation unit is adapted for summing up respectively the highest positive DC voltage level, lowest positive DC voltage level, the highest negative DC voltage level and the lowest negative DC voltage level and said summed positive and negative DV voltages are supplied by said summation unit to said failure condition detection circuit, said failure detection circuit detecting a failure condition if said summed positive and negative voltages differs from a predefined DV voltage threshold level more than a predefined tolerance voltage. One important further aspect of the invention is based on the fact that the duration of the transient currents is assumed to be known and the electrical apparatus is switched to stand-by mode if the duration of excessive currents is longer then the know duration of the transient currents in normal operation, i. e. when the summed up DC voltage differs from the predefined DC threshold voltage level more than a predetermined tolerance voltage for a time duration longer than the known time durations of transient currents.

In this embodiment of the invention the failure detection is dependent on the summed up positive and negative voltages. Thus, an even more efficient and reliable detection of excessive currents and voltages is possible.

In accordance with another embodiment the failure detection unit only detects said failure condition if said summed up voltage differs from said threshold voltage longer than a time period exceeding transients in the circuitry of said DC power supply unit (PSU) or the electrical apparatus.

Further advantageous embodiments and improvements of the invention may be taken from the dependent claims.

Furthermore, it should be noted that the invention also comprises embodiments of features/steps, which have been separately described/claimed in the specification/claims. Furthermore, the invention can comprise embodiments, which consist of features separately shown in separate drawings and separately described in the claims and the specification.

## BRIEF DESCRIPTION OF THE DRAWINGS

In the drawings the same or similar reference numerals designate the same or similar parts and components/steps throughout the specification. In the drawings:

Fig. 1    shows a general electronic system comprising a DC power supply unit PSU and an electrical load apparatus LS in accordance with the prior art;

Fig. 2    shows a more detailed circuit diagram of the electronic circuit in Fig. 1, in particular showing the usage of fusing resistors FR1, FR2, FR3, in accordance with the prior art;

Fig. 3    shows a typical fusing characteristic of a fusing resistor, in accordance with the prior art;

Fig. 4a    shows an overview of a DC power supply unit PSU in accordance with one embodiment of the invention;

Fig. 4b    shows another embodiment of the invention, similar to the one in Fig. 4a, in particular showing a more detailed circuit diagram of blocks more generally shown in Fig. 4a;

Fig. 5a    shows another embodiment of a DC power supply unit PSU in accordance with the invention in which a failure detection is based on the summing up of positive and negative voltages separately;

Fig. 5b    shows a more detailed circuit diagram of the blocks shown in Fig. 5a; and

Fig. 5c    shows another embodiment of the invention in which a signal conditioner is used in addition to Fig. 5b.

## PRINCIPLE OF THE INVENTION

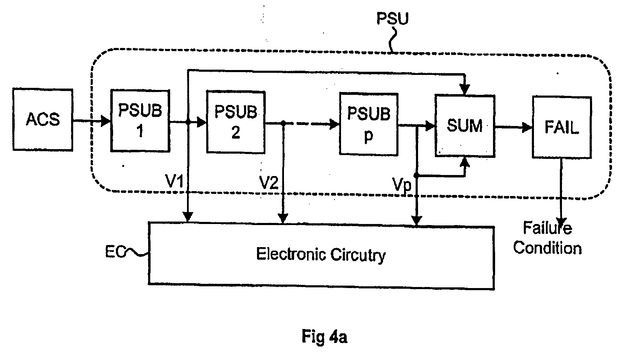

Fig. 4a shows an electrical apparatus EA comprising a DC power supply unit PSU in accordance with the invention. As shown in Fig. 4a, a cascade of a plurality of cascade-connected DC voltage supply sub-units (PSUB1, PSUB2-PSUBp) are provided which each output a DC voltage V1, V2, VP with a predetermined DC-level.

In Fig. 4a the cascade-connected DC voltage supply sub-units are adapted, such that the first DC supply sub-unit PSUB1 of said cascade connection outputs a DC voltage with the highest DC voltage level of all the output voltages of the DC voltage supply sub-units. The succeeding DC voltage supply sub-unit PSUB2, ..., PSUBp of said cascade-connection respective outputs DC voltages with successively decreasing DC voltage levels. Thus, the last DC voltage supply sub-unit PSUBp outputs the DC voltage VP with the lowest DC voltage level. As shown in Fig. 4a, the first power supply sub-unit PSUB1 receives an AC voltage from an AC voltage source VCS and the individual sub-units output the respective voltages V1, V2, ..., VP respectively to the electronic circuitry EC of the electrical apparatus EA. The electronic circuitry EC can generally be constituted by circuit elements, printed circuit boards another electronic components constituting together a load circuitry of the electrical apparatus EA.

The DC power supply unit PSU also comprises at least one summation unit SUM for summing up the highest DC voltage level V1 and the lowest DC voltage level VP. A failure condition detection unit FAIL is provided for detecting a failure condition if said summed up DC voltage differs from a predefined DC threshold voltage level by more than a predetermined tolerance voltage. As will be explained below, one important further aspect of the invention is based on the fact that the duration of the transient currents is assumed to be known and the electrical apparatus is switched to stand-by mode if the duration of excessive currents is longer then the known duration of the transient currents in normal operation, i.e. when the summed up DC voltage differs from the predefined DC threshold voltage level more than a predetermined tolerance voltage for a time duration longer than the known time durations of transient currents.

Thus, the summation unit SUM outputs a voltage level proportional to the summation of the largest and smallest DC level from the different test points in the cascade-connected voltage supply sub-units.

In accordance with another embodiment with the invention, the failure condition detection unit FAIL may be incorporated in a system micro-controller, i.e. to the A/D converter of a system controller. On the basis of the detected failure condition the system-micro-controller is preferably programmed to switch the electrical apparatus EA to a stand-by mode in such abnormal conditions.

For example, if the invention is applied to consumer electronics products having such a micro-controller capable of switching the system to stand-by mode, the different voltages V1, V2, ..., VP are fed to the respective circuit elements in the electronic circuitry EC. Thus, in Fig. 4a not only excessive currents in components in the DC power supply unit PSU may be monitored, but also excessive currents in components acting as short-circuit elements in the complete apparatus EA can trigger the stand-by mode to maintain electrical safety.

In accordance with the principle of the invention, as shown in Fig. 4a, the use of fusing resistors is avoided and is replaced by sampling a critical voltage level at several test points where the voltage levels are a function of the critical currents flowing in the circuitry. As explained above, preferably the sampling process is realized by the system micro-controller including the failure condition detection unit (FAIL). Thus, the test points, which are for example connected to the A/D converter inputs of a system micro-controller enable the system micro-controller to monitor the current level changes at various parts in the circuitry.

With this invention an improved product reliability and safety is maintained together by monitoring the voltage variations at the test points because the normal or standard variations caused by transient currents and steady-state currents in a normal operation of the apparatus are known. The voltage variations due to excessive currents in abnormal conditions are also known and with this data input to the failure condition detection unit FAIL, the DC power supply unit PSU can either continue a normal operation or is switched to a stand-by mode of operation.

The embodiment in Fig. 4a shows that the summation unit SUM receives as first input the voltage V1 on the connection between the first and second sub-units PSUB1 and PSUB2. A second input of the summation unit SUM is the voltage VP output by the last sub-unit PSUBp of the cascade connection. The predetermined threshold voltage level as well as the time period used by the failure condition detection unit FAIL for determining a failure condition (based on which a system controller can switch to a stand-by mode) can be set in accordance with predefined and known system characteristics of the electrical apparatus EA.

The invention is also not restricted to the case where the electrical apparatus EA is a TV receiver, i.e. the invention relates to avoiding excessive currents and voltages in many other consumer electronic products such as DVD players, DVB players, PC monitors and video cassette players which switch to a stand-by mode during a failure condition.

Although Fig. 4a shows an embodiment of the invention where only the voltages V1 and VP are monitored, it may be understood that the configuration in Fig. 4a can be extended in such a manner that the summation unit SUM receives in addition also inputs from V2 an other intermediate points in the cascade connection of the power supply sub-units.

In accordance with another embodiment, the failure detection unit only detects said failure condition if said summed up voltage differs from said threshold voltage longer than a time period exceeding transients in the circuitry of said DC power supply unit (PSU) or the electrical apparatus.

## VOLTAGE REGULATOR EMBODIMENT

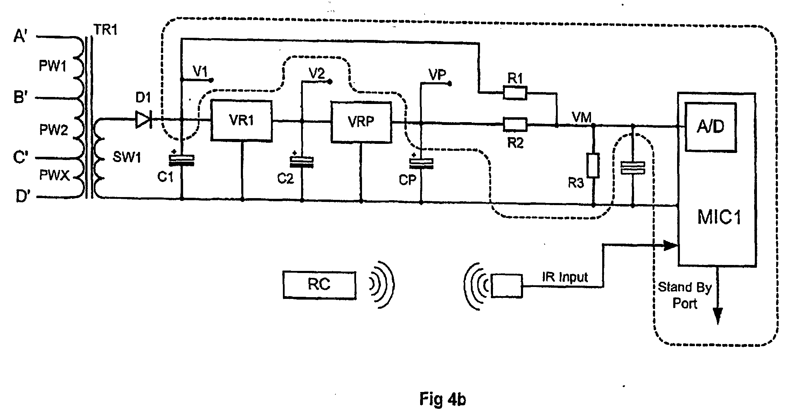

The more specific embodiment of the configuration shown in Fig. 4a using voltage regulators inside the DC power supply sub-units PSUB1, ..., PSUBp is shown in Fig. 4b. The example is made here for a TV receiver or another electronic component in which a system controller MIC1 is controlled remotely with a remote controlled RC. The system controller MIC1 comprises an analogue/digital-converter A/D for converting a summed up voltage into a digital value, which can be processed by a micro-controller MIC1. However, it should be noted that the invention can be applied to any other electronic component comprising other types of system-controllers. Therefore, the use of the microprocessor MIC1 with its analogue/digital conversion unit A/D is only one example of the invention.

In Fig. 4b the embodiment of the DC power supply unit comprises an AC source ACS constituted by a transformer TR1 whose secondary side SW1 supplies AC voltage to the first DC power supply sub-unit, constituted in Fig. 4b by the first diode D1 and the first capacitor C1.

The transformer TR1 comprises, similarly as in Fig. 2, a plurality of primary windings PW1, PW2, PWX having terminals A', B', C', D'.

The DC power supply unit PSU in Fig. 4b also comprises as the individual power supply sub-units a plurality of cascade-connected voltage regulators VR1, VRP (in Fig. 4b P = 2).

Furthermore, preferably the embodiment in Fig. 4b comprises a capacitor C1, C2, ..., CP connected across each output of the voltage regulator VR1, VRP. Thus, any capacitor in the DC supply acting as a short-circuit element in abnormal conditions would set the output of the VR outputting the lowest DC level, for example VRP in Fig. 4b, to a potential close to zero Volt. Similarly, the diode D1 connected to the secondary winding of the step-down transformer decreases or increases the voltage V1 and thus VM when acting as short-circuit. Additionally, the maximum DC voltage level in the DC supply may be effected due to a short circuit in the primary winding of the step-down transformer.

Since the primary function of the summation unit SUM in Fig. 4a is the summation of the voltages, such a summation unit SUM is constituted in the embodiment in Fig. 4b by connecting two resistors R1, R2 to a common node VM together with another resistor R3. The values of the resistors R1, R2, R3 are selected such that during normal operation conditions (no short circuits) the summed DC voltage is smaller than a predefined DC threshold voltage level.

In accordance with another embodiment, the failure detection unit FAIL, constituted by the micro-controller MIC1, has preset a predetermined time period, which is used as a threshold time period for determining the failure condition. That is, the failure detection unit FAIL should not output detect a failure condition, if the summed up voltage exceeding the threshold voltage is due to transient currents within pre-determined time periods. Only if the changes in the voltage level occur in time periods longer than predetermined periods for transient currents the failure detection unit FAIL will detect this to be a failure condition. In this case the micro-controller MIC1 switches the apparatus to the stand-by mode.

## Operation examples

AS explained above, in Fig. 4b the transformer TR1 is step-down transformer having several primary windings PW1, PW2, PW3. The secondary winding SW1 of the transformer PR1 may comprise more than one winding and preferably the invention may be applied to any of the windings as design requirements. As also explained above, the first diode D1 and the first capacitor C1 is the first stage of the sub-unit PSUB1 and it outputs the highest DC voltage level V1. The combination of the voltage regulator VR1 and C2 is the second stage PSUB2 of the supply unit PSU and it outputs a potential V2 lower than V1. The following stage combination of VRP and CP outputs a (+) level VP, which is yet again smaller V2. The number of stages to be constructed can be extended in accordance with the design requirements. V1 and V2 and VP are the outputs of the DC power supply unit in Fig. 4.

In Fig. 4 two indicative test points are selected to determine the occurrence of an abnormal condition. V1 and VP are the selected indicative test points because at least one of them will vary with the possible failure of a component leading to a flow of excessive current. Possible failures causing an excessive current flow may be one of the components such as D1, C1, C2, CP, which act as a short circuit in a failure condition, or one of the primary windings of the transformer TR1 being shortened. That is, another excessive current flow may be caused by a short circuit in the primary winding PB1, PB2 or PBX. According to another embodiment of the invention, as already mentioned above, a construction can be used in which also the second voltage level V2 is supplied to the summation unit (the node VM) via a resistor.

In the configuration in Fig. 4b, the value obtained from summing the voltage V1 (the highest DC voltage level) and VP (the lowest DC voltage level) is a constant that indicates whether the current values supplied through the outputs of the DC supply are values for normal operation of the DC supply or values for an excessive current flowing in the DC supply. Assuming an amplification a (dependent on the resistor R1) for the voltage level V1 and b (dependent on the resistor R2) for the voltage level VP, the output the summing network at the node VM is:

$$VM = a*V1 + b*VP \qquad (1)$$

Then, the system micro-controller will preferably periodically sample the level VM. VM has a known value for normal operation conditions, which is here designated $VM_{normal}$. If the capacitor C2 or the capacitor CP is shortened, the voltage level VP will be set to a value close to zero and therefore the minimum level of $VM_{low}$ is:

$$VM_{low} = a*V1 + 0 \qquad (2)$$

The other extreme condition in Fig. 4b is if the capacitor C1 is shortened. In this case $VM_{low}$ is decreased to a level close to 0V, namely:

$$0 \leq VM_{low} \leq a*V1 < VM_{normal}$$

On the other hand, one of the primary windings of the transformer TR1 (the primary winding PW1, PW2 or PWX) is shortened, then the voltage V1 goes to a higher level such as $Vl_{high}$ which means that

$$VM_{high} = a*V1_{high} + b* VP \qquad (3)$$

and

$$VM_{high} > VM_{normal} \qquad (4)$$

As explained above, the voltage level VM, which is being monitored by the failure detection unit in the micro-controller MIC1 has the value of $VM_{normal}$ only when steady-state current levels are not exceeding the normal operation values and therefore

$$0 \le VM_{low} \le a*V1 < VM_{normal} < VM_{high} \qquad (5)$$

Thus, in the embodiment in Fig. 4b the failure detection unit (the system micro-controller) monitors the value of the node voltage (VM) to verify whether it has a value close to $VM_{normal}$. Therefore, by monitoring whether VM is approximately, i.e. within a certain tolerance, equal to $VM_{normal}$ the failure detection unit FAIL can determine whether a short circuit has taken place in D1, C1, C2, CP or PW1, PW2 or PWX, if the value of VM exceeds or is below the predetermined threshold voltage $VM_{normal}$ within certain limits i.e. tolerances.

Preferably, deviations from $VM_{normal}$ are ignored for the preset transient time period $\Delta t$ to allow the outputs currents to settle into the steady-state voltage level. That is, preferable the failure detection unit FAIL only detects a failure condition, if VM deviates from $VM_{normal}$ (exceeds $VM_{normal}$ or is below $VM_{normal}$) for a certain time period $\Delta t$. The time period $\Delta t$ is dependent on the duration of transient currents in the complete apparatus. That is, the failure detection unit FAIL should not detect periods in which currents settle into a steady state as a failure condition. For this purpose the system micro-controller MIC1 is adapted to sample the voltage level VM periodically and set the system to a stand-by mode when the value of VM differs from $VM_{normal}$ for a duration longer than $\Delta t$. In this manner the way of overheating components such as a transformer diode D1 or voltage regulators VR1, VR2 due to excessive currents is prevented for product safety reasons.

Additionally, one of the reasons for the apparatus to be out of service within normal use of apparatus is also prevented as the fusing resistors are not included in the system.

The above described embodiments of the invention in Fig. 4a, in Fig. 4b should not be confused with a technique where simply individual voltages at individual measurement points in a circuit are monitored and checked whether they reach excessive levels. The approach in Fig. 4b is based on the summing up of the lowest and highest voltage and comparing it to a preset threshold voltage $VM_{normal}$, which is predefined by the system. Only if the summed up voltage differs from the threshold voltage $VM_{normal}$ more than a certain tolerance, the failure detection unit incorporated in the micro-controller MIC1 will detect an abnormal condition, for example a short circuit in one or more of the elements D1, C1, C2, CP, PW1, PW2 or PWX. Preferably, in accordance with another embodiment of the invention, the failure detection unit outputs the failure detection condition only if the state in which the voltage VM differs from the threshold voltage $VM_{NORMAL}$ prevails for a time period longer than known transient operations in the electrical apparatus. This avoids that conditions in which transient currents settle down to a steady state are incorrectly determined as a failure condition.

### POSITIVE AND NEGATIVE VOLTAGE SUMMATION

As explained above, in the embodiments in Fig. 4a, 4b a cascade connection of voltage regulators VR1, VRP together with a summation unit is used in order to sum up the lowest VP and highest V1 positive voltage (see the circuit connection of the capacitor C1 with the positive terminal at the input of the voltage regulator VR1 indicating the positive polarity of V1). However, many electrical apparatus may not only require a positive voltage with respect to a zero voltage (e.g. ground) but they may also require negative voltages to be supplied to individual portions of the electronic circuitry EC.

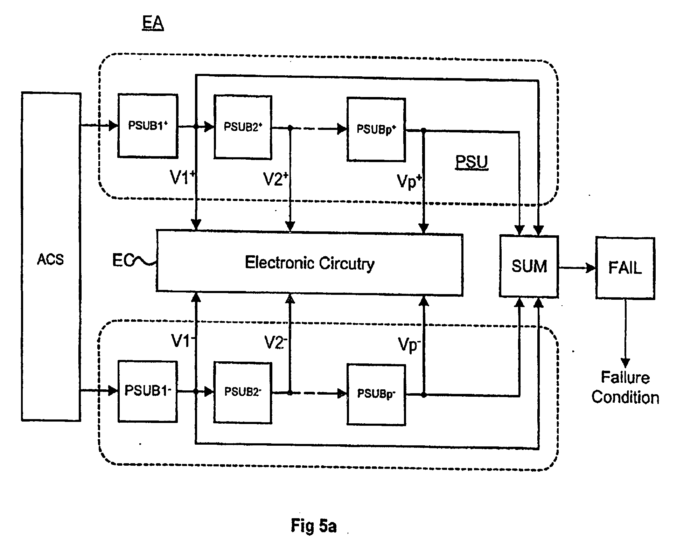

Fig. 5a shows an embodiment of the invention in which two cascades of cascade-connected DC voltage supply sub-units $PSUB1^{+}$, $PSUB2^{+}$, ..., $PSUBp^{+}$; $PSUB1^{-}$, $PSUB2^{-}$, ..., $PSUBp^{-}$ are each constituted as explained with reference to Fig. 4a, wherein the upper cascade in Fig. 5a outputs the successively decreasing positive voltages $V1^{+}$, $V2^{+}$, ..., $VP^{+}$ and the lower cascade outputs the successively decreasing negative voltages $V1^{-}$, $V2^{-}$, ..., $VP^{-}$. That is, the first cascade outputs positive DC voltages with predefined positive DC voltage levels and the second cascade outputs negative DC voltages with predefined negative DC voltage levels. The summation unit SUM is, similarly as in Fig. 4a, adapted for summing up respectively the highest positive DC voltage level $V1^{+}$, the lowest positive DC voltage level $VP^{+}$, the highest negative DC voltage level $V1^{-}$ and the lowest negative DC voltage level $VP^{-}$.

In Fig. 5a a failure condition unit FAIL monitors again the sum up voltage and detects a failure condition if the monitored summed up voltage differs from a threshold voltage more than a predetermined tolerance voltage. In accordance with another embodiment of the invention, the failure condition is only output if the differing voltage state prevails longer than a predetermined set time period. This time period is longer than the time period of transient operations in the circuitry of the DC power supply unit to avoid that transient operations are detected as failure conditions.

### Summing of positive and negative voltages - operation example

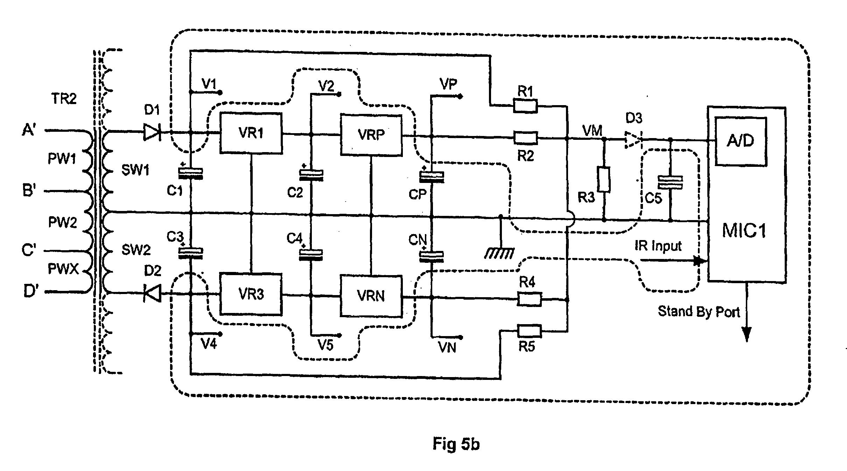

Fig. 5b shows a more concrete embodiment of the embodiment in Fig. 5a, similarly as the embodiment in Fig. 4b shows an embodiment of the circuit in Fig. 4a.

In Fig. 5b the primary winding of the transformer TR2 again comprises several primary windings PW1, PW2 and PWX and the secondary winding of the transformer TR2 comprises two secondary windings SW1, SW2 in order to supply symmetrically split potential outputs. In Fig. 5b, similarly as in Fig. 4b, the sequence of successively decreasing positive voltages is generated by the first diode D1 and the capacitor C1 (forming the first power supply stage) and by the serially connected voltage regulator VR1, VRP together with their capacitors C2, CP. At the summation node VM two resistors R1, R2 are respectively connected to the nodes supplying the voltages V1, VP.

In addition to Fig. 4b, Fig. 5b shows in the lower half a cascade connection of a second diode D2, a capacitor C3 and serially connected voltage regulators VR3, VRN together with capacitors C3, C4, CN. If the two secondary windings SW1, SW2 equally split the voltage generated over the complete secondary side of the transformer TR2, then the power supply sub-units in Fig. 5b output the DC levels V4, V5 and VN, which are in reverse polarity to VR1, VR2 and VN with respect to a common ground (the line to which all capacitors C1, C2, CP, C3, C4, CN are commonly connected).

In Fig. 5b, the summation unit SUM also comprises the resistors R4, R5 feeding the voltage V4, VN to the common node VM. Therefore, the resistors R4, R5, R1, R2 and R3 constitute the summation unit SUM shown in Fig. 5a.

As indicated with dash lines in Fig. 5b, an operational diode D3 may preferably be added to protect an analog/digital converter A/D inside the micro-controller against reverse polarization because VM becomes negative in the absence of positive levels in the inputs of the summation unit. As can be seen from Fig. 5b, despite the fact that two cascades are respectively provided for outputting successively decreasing positive voltage levels and successively decreasing negative voltage levels, only one summation unit SUM is provided, more precisely the resistors R1, R2, R4, R5 are connected at the same node VM.

In Fig. 5b the following voltage relationships are used for detecting a failure condition, for example a short circuit in one of the components or in one of the primary windings of the transformer TR2.

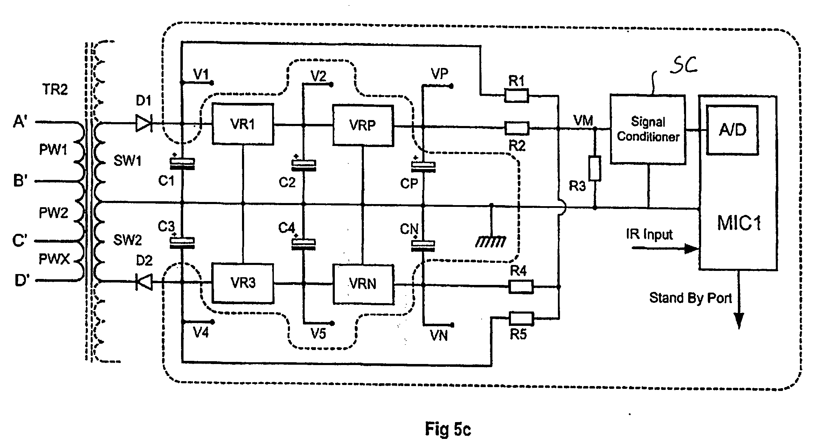

If in the embodiment in Fig. 5 d is the gain for the voltage level V1, e is the gain for the voltage level VP, f is the gain for the voltage level V4 and g is the amplification for the voltage level VN, the summed voltage VN satisfies the following relationship:

$$VM = d*V1 + e*VP - f*V4 - g*VR \qquad (6)$$

Similarly as in the embodiment in Fig. 4b, a failure condition is output if the voltage VM differs from a preset threshold voltage $VM_{NORMAL}$ more than a predetermined tolerance voltage. The variation level of VM is adjusted to be within the input range of the A/D converter A/D in the micro-controller MIC1. In case the A/D converter can perform the conversion only in positive range in order to have the voltage VM in positive level in normal operation of the apparatus, d, e, f and g must be adjusted by the summing network resistors R1, R2, R4, R5, R3 to satisfy the following relation:

$$|d*V1| + |e*VP| > |fV4|+|g*VN|$$

Additionally, to reflect the current changes coming from the shorted primary windings such as PW1, PW2 or PWX to VM being monitored by system controller, the following relationship must be satisfied, if the DC level of VR1 and VR3 is the same in level but different in polarity:

$$d \neq f \qquad (7)$$

The value of d and f is significally different to cause a sufficient drift in VM. The level of VM is warranted to be a positive value if the relation (7) is satisfied and excessive currents are following. The positive VM value is known for normal operations conditions of the apparatus. If in addition the time duration is preferably used for detecting failure conditions, in accordance with another embodiment of the invention, also the time duration $\Delta t$ for internal transient currents to settle into a steady state level is known.

In Fig. 5b, the component such as C1, C2, CP, C3, C4 and CN cause hazardous conditions in the apparatus when they fail and act as shorted components. Additionally, shorted primary windings PW1 and/or PW2 and/or PWX could cause an excessive current to flow in the DC power supplies. Shorted primary windings PW1, PW2 or PWX would increase the voltages V1 and V4. For example, C1 and/or C2 and/or CP would set the level VP to a level close to zero when they act as a short circuit element. C2 and/or C2 and/or CN would set VN to a level close to zero when they act as a short circuit element.

In Fig. 5b, the summing unit R1, R2, R4, R5, R3 outputs the level VM whose value is determined by the relationship (6). VM has a known and specific value when the currents normal for operating conditions are flowing. This value is the threshold value $VM_{NORMAL}$. Any component cause the currents to reach excessive levels would also cause VM to drift away from the threshold level $VM_{NORMAL}$.

Preferably, in conditions when VM is drifted from $VM_{NORMAL}$ for a duration longer than the transient time period $\Delta t$, the micro-controller (a stand-by mode control unit) switches the apparatus automatically in a stand-by mode without the control of the user. For example, in a typical micro-controller in a consumer product this is done by outputting a stand-by port in its active state. The A/D input of the micro-controller in Fig. 5b has a sampling range for positive values. For negative values of VM, the A/D converter simply outputs $\phi\phi$H.

As was already explained for the embodiment in Fig. 4b, 4a, also the embodiment for positive and negative voltages in Fig. 5a, 5b is not based on merely monitoring voltages at certain circuit portions of the electrical apparatus and testing whether they exceed certain thresholds. That is, similarly as in Fig. 4b, a failure condition is detected if the summed up voltages are larger or smaller than a predetermined threshold voltage within a certain tolerance. In addition, the failure condition is only output if the differing voltage state prevails for a longer period than normal transients required to settle down to steady state conditions. This allows to differ real transient operation currents from real failure conditions.

Fig. 4a, 4b and Fig. 5a, 5b both exhibit the primary advantage of the invention that merely the evaluation of a largest and smallest voltage in a cascade connection of sub-units and the comparison of a summed up voltage thereof with respect to a threshold voltage allows the detection of a failure condition. Thus, there is no need to monitor voltages individually at each separate circuit portion of the electric apparatus, there is no need to use fusing resistors in the protection portion and the resistors of the summation unit can be constituted by standard SMD (Surface Mount Devices).

## SIGNAL CONDITIONER EMBODIMENT

As explained above, the embodiment in Fig. 5b comprises the inputting of the summed up voltage VM into an A/D converter of the micro-controller MIC1. Thus, in Fig. 5b only positive levels of the voltage VM can be sampled by the micro-computer.

In Fig. 5c there is shown an embodiment where a A/D converter A/D can operate in a range from (-) levels to (+) levels. In such a case a signal-conditioning network SC is used to convert the actual level of VM to the measurement range of the A/D converter. The signal conditioner is a signal conditioning block that provides filtering, gain and offset adjustment to the signal before the Analog/Digital converter of the micro-controller. It contains active and/or passive components that form a low pass filter. It is also utilized to remove temporary voltage fluctuations that may happen during normal operation of the electronic load. This way the false triggering of the failure signal can be prevented.

In addition, the signal conditioner can also provide means to the signal to be digitised to make use of the full dynamic range available at the input of the Analog/Digital converter by applying signal amplification and adding a DC offset. Once the signal is conditioned, it is then digitised for further processing.

Otherwise, the embodiment in Fig. 5c is identical to the embodiment in Fig. 5b.

## FURTHER EMBODIMENTS

In any of the embodiments in Figs. 4 and 5, the components to cause variations of VM as a result of a short circuit are not limited to the components in the DC power supply, for example the transformer elements, the diodes and the capacitors. Other components such as transistors TR1 connected to the outputs of the DC power supply in the actual load circuitry EC (to which the individual voltages V1, V2, VP; V4, V5, VN are supplied) can cause excessive currents when being shorted in abnormal conditions. Therefore, any short-circuit condition or a failure condition within the power supply unit itself or within an electrical apparatus connected to it and receiving the respective voltages can be monitored with respect to a failure.

In Fig. 4b and Fig. 5b embodiments are shown where the power supply sub-units are constituted by voltage regulators VR and where the summation unit is constituted by a plurality of resistors R1, R2, R3, R4, R5. However, in accordance with other embodiments, the power supply units PSUB and the summation unit may be constituted by other elements.

For example, in accordance with one embodiment the summation unit can be constituted by active elements such as an operational amplifier. Instead of the voltage regulators VR, a cascade connection of transformers may be used.

Furthermore, in accordance with another embodiment of the invention the A/D converter A/D, which constitutes a preferred way of sampling the voltage at the node VM, may either be integrated inside a micro-controller IC or may be connected externally to the micro-computer.

Furthermore, it should be noted that in all the embodiments in Figs. 4b, 5b and 5c, the switching to a stand-by operation mode in case of a detection of a failure condition reduces the AC outputs of the transformer TR2 to a level close to zero volt via standard methods in consumer electronics. Since in accordance with the invention the power supply unit PSU is switched to a standby mode, only part of the supply circuitry to drive the micro controller is operating and any stage of the supply circuitry to drive parts of the operation other than the system micro-controller MIC1 is actually switched to an inactive mode.

That is, the stand-by operation of the AC supply circuitry is designed to deliver nearly zero volt in all secondary windings SW1, SW2 of the transformer TR1 driving any stage other than the system micro-controller.

It should be noted that in each of the aforementioned described embodiments in Figs. 4a, 4b and Fig. 5a, 5b, 5c, a standby-mode control unit, such as the micro-controller MIC1, for switching am operation mode of said electrical apparatus to a standby-mode when said failure detection unit detects a failure condition, can be provided. For example, if the summed up voltage or current exceeds 0.5 A, then the product may be forced to switch to the standby-mode in which only 1 mA is drawn.

In combination with the above features in an apparatus where an individual power supply with a separate transformer is included to drive the system micro-controller in stand-by mode, all secondary windings of the main transformer active in normal operation mode can preferably be muted.

The methods to drive the electrical apparatus in a stand-by mode is not the teaching of this application.

However, stand-by mode switching is known to a skilled person and for example it can be carried out by outputting a signal from the micro-controller MIC1 to shut off first the most relevant components and circuit portions, where a high power loss occurs.

It should also be noted that instead of the complicated usage of fusing resistors, the resistors R1, R2, R3, R4, R5 in the embodiments in Fig. 4 and Fig. 5 can be constituted by SMD type resistors to build up the summing unit of the invention. The power rating of these resistors is, for example in the case of a TV receiver, typically in the range of 0.25 W and this allows an easy PCB layout design and solves the problem with the temperature rise of fusing resistors in fusing duration in which temperature may harm the PCB material and other components sensitive to a high temperature.

## INDUSTRIAL APPLICABILITY

The above-described embodiments of the invention employ in the DC power supply unit PSU one or two cascades of serially connected power supply sub-units together with a summing unit to sum up respectively the highest and lowest voltage of the respective cascade connections. If the summed voltage differs greatly from a predetermined said threshold voltage, possibly over a predetermined transient time interval, then the control unit of the power supply unit switches the power supply unit and/or the electrical apparatus connected to it into a stand-by mode.

The invention may preferably be used in any electronic consumer product, which comprises the stand-by operation mode as a standard feature. Consumer electronic products where this stand-by feature is used comprise for example TV receivers, DVD players, DVB players, PC monitors and video cassette players.

Each of these devices include electronic circuitry with a plurality of circuit portions each driven by a particular one of DC voltages output by the DC power supply sub-units in accordance with the invention. The failure detection unit detects as a failure condition a short circuit in an electrical path in one or more of the circuit portions at the input or output of the DC voltage supply sub-units.

Reference numerals in the claims serve clarification purposes and do not limit the scope of these claims.

## Claims

1. A DC power supply unit (PSU) providing a DC voltage for an electrical apparatus and having a failure condition detection function, comprising:

   **a1)** at least a first cascade of a plurality of cascade-connected DC voltage supply sub-units (PSUB) each outputting a DC voltage with a predefined DC voltage level;

   **a2)** said cascade-connected DC voltage supply sub-units being adapted such that the first DC voltage supply sub-unit of said cascade connection outputs the DC voltage with the highest DC voltage level, the succeeding DC voltage supply sub-units of said cascade connection output DC voltages respectively with successively decreasing DC voltage levels and the last DC voltage supply sub-unit of said cascade connection outputs the DC voltage with the lowest DC voltage level;

   **b)** at least one summation unit (SUM) for summing up the highest DC voltage level and the lowest DC voltage level; and

   **c)** a failure condition detection unit (FAIL) for detecting a failure condition if said summed DC voltage differs from a predefined DC threshold voltage level more than a predetermined tolerance voltage.

2. A DC power supply unit (PSU) according to claim 1, **characterized in that** said failure detection unit only detects said failure condition if said summed up voltage differs from said threshold voltage longer than a time period exceeding transients in the circuitry of said DC power supply unit (PSU) or the electrical apparatus.

3. A DC power supply unit (PSU) according to claim 1, *characterized in that*
   the first one of said cascade-connected DC voltage supply sub-units receives an AC voltage from an AC voltage source (ACS) at an input thereof.

4. A DC power supply unit (PSU) according to claim 2, *characterized in that*
   said failure detection unit (FAIL) detects as a failure condition a short circuit in a electrical path at the input or output of a DC voltage supply sub-unit (VR1; VRP) or a short circuit in at least one of the primary windings of an AC transformer (TR1, TR2) of said AC voltage source (ACS).

5. A DC power supply unit (PSU) according to claim 1, *characterized in that*
   said DC voltage supply sub-units each comprise a DC voltage regulator (VR1; VRP).

6. A DC voltage supply unit (PSU) according to claim 1, *characterized in that*
   said first one of said plurality of DC voltage supply sub-units comprises a diode (D1) and a capacitor (C1).

7. A DC voltage supply unit (PSU) according to claim 2,
   ***characterized in that***
   said AC voltage source (ACS) comprises a transformer (TR!, TR2) whose secondary side supplies said AC voltage to said first DC voltage supply sub-unit (PSUB1).

8. A DC voltage supply unit (PSU) according to one or more of claims 1-7, ***characterized by*** two cascades of cascade-connected DC voltage supply sub-units (PSSUB) each being constituted as in one or more of claim 1-5, wherein said first cascade of DC voltage supply units outputs positive DC voltages with predefined positive DC voltage levels, said second cascade of DC voltage supply units outputs negative DC voltages with predefined negative DC voltage levels, said summation unit (SUM) is adapted for summing up respectively the highest positive DC voltage level, lowest positive DC voltage level, the highest negative DC voltage level and the lowest negative DC voltage level and said summed positive and negative DC voltages are supplied by said summation unit (SUM) to said failure condition detection circuit (FAIL), said failure detection circuit (FAIL) detecting a failure condition if said summed positive and negative voltages differs from a predefined DC voltage threshold level more than a predetermined tolerance.

9. A DC power supply unit (PSU) according to claim 8, **characterized in that** said failure detection unit only detects said failure condition if said summed up voltage differs from said threshold voltage longer than a time period exceeding transients in the circuitry of said DC power supply unit (PSU) or the electrical apparatus.

10. A DC voltage supply unit (PSU) to claim 8,
    ***characterized by***
    a signal conditioner provided between the summation units and the failure condition detection unit.

11. An electrical apparatus, comprising:

    **a)** a DC power supply unit (PSU) according to one or more of the claim 1-10;

    **b)** electronic circuitry including a plurality of circuit portions each driven by a particular one of said DC voltages output by said DC voltage supply sub-units (VR1, VRP); wherein

    **c)** said failure detection unit (FAIL) detects as a failure condition a short circuit in a electrical path in one or more of the circuit portions at the input or output of a DC voltage supply sub-unit (VR1; VRP).

12. An electrical apparatus according to claim 11,
    ***characterized by***
    a stand-by mode control unit (MIC1) for switching an operation mode of said electrical apparatus to a stand-by mode when said failure detection unit detects a failure condition.

13. An electrical apparatus according to claim 11,
    ***characterized in that***
    said electrical apparatus comprises a TV receiver, a DVD player, a DVB player, a PC monitor or a Video cassette player.


**Patentansprüche**

1. Gleichstrom-Energieversorgungseinheit (PSU), die eine Gleichspannung für eine elektrische Vorrichtung bereitstellt und eine Fehlerzustands-Erfassungsfunktion aufweist, umfassend:

    **a1)** zumindest eine erste Kaskade einer Mehrzahl von Kaskaden-verbundenen Gleichspannungsversorgungs-Untereinheiten (PSUB), die jeweils eine Gleichspannung mit einem vordefinierten Gleichspannungspegel ausgeben;

    **a2)** wobei die Kaskaden-verbundenen Gleichspannungsversorgungs-Untereinheiten derart ausgelegt sind, dass die erste Gleichspannungsversorgungs-Untereinheit der Kaskadenverbindung die Gleichspannung mit dem höchsten Gleichspannungspegel ausgibt, die darauffolgenden Gleichspannungsversorgungs-Untereinheiten der Kaskadenverbindung Gleichspannungen jeweils mit aufeinanderfolgend abnehmenden Gleichspannungspegeln ausgeben, und die letzte Gleichspannungsversorgungs-Untereinheit der Kaskadenverbindung die Gleichspannung mit dem niedrigsten Gleichspannungspegel ausgibt;

    **b)** zumindest eine Summationseinheit (SUM) zum Aufsummieren des höchsten Gleichspannungspegels und des niedrigsten Gleichspannungspegels; und

    **c)** eine Fehlerzustands-Erfassungseinheit (FAIL) zum Erfassen eines Fehlerzustands, wenn sich die summierte Gleichspannung von einem vordefinierten Gleichspannungsschwellenpegel um mehr als eine vorbestimmte Toleranzspannung unterscheidet.

2. Gleichstrom-Energieversorgungseinheit    (PSU) nach Anspruch 1,

**dadurch gekennzeichnet, dass**

die Fehlererfassungseinheit nur den Fehlerzustand erfasst, wenn sich die aufsummierte Spannung von der Schwellenspannung länger als eine Zeitperiode unterscheidet, die Transienten in dem Schaltkreis der Gleichspannungs-Energieversorgungseinheit (PSU) oder der elektrischen Vorrichtung überschreitet.

3. Gleichstrom-Energieversorgungseinheit (PSU) nach Anspruch 1,

   **dadurch gekennzeichnet, dass**

   die erste der Kaskaden-verbundenen Gleichspannungsversorgungs-Untereinheiten eine Wechselspannung von einer Wechselspannungsquelle (ACS) an einem Eingang davon aufnimmt.

4. Gleichstrom-Energieversorgungseinheit (PSU) nach Anspruch 2,

   **dadurch gekennzeichnet, dass**

   die Fehlererfassungseinheit (FAIL) als einen Fehlerzustand einen Kurzschluss in einem elektrischen Pfad an dem Eingang oder Ausgang einer Gleichspannungsversorgungs-Untereinheit (VR1; VRP) oder einen Kurschluss in zumindest einer der primären Wicklungen eines Wechselspannungstransformators (TR1, TR2) der Wechselspannungsquelle (ACS) erfasst.

5. Gleichstrom-Energieversorgungseinheit (PSU) nach Anspruch 1,

   **dadurch gekennzeichnet, dass**

   die Gleichspannungsversorgungs-Untereinheiten jeweils einen Gleichspannungsregler (VR1; VRP) umfassen.

6. Gleichspannungs-Versorgungseinheit (PSU) nach Anspruch 1,

   **dadurch gekennzeichnet, dass**

   die erste der Mehrzahl von Gleichspannungsversorgungs-Untereinheiten eine Diode (D1) und einen Kondensator (C1) umfasst.

7. Gleichspannungs-Versorgungseinheit (PSU) nach Anspruch 2,

   **dadurch gekennzeichnet, dass**

   die Wechselspannungsquelle (ACS) einen Transformator (TR1, TR2) umfasst, dessen Sekundärseite der ersten Gleichspannungsversorgungs-Untereinheit (PSUB1) die Wechselspannung zuführt.

8. Gleichspannungs-Versorgungseinheit (PSU) nach einem oder mehreren der Ansprüche 1-7,

   **dadurch gekennzeichnet, dass**

   zwei Kaskaden der Kaskaden-verbundenen Gleichspannungsversorgungs-Untereinheiten (PSUB) jeweils wie in einem oder mehreren der Ansprüche 1-5 ausgebildet sind, wobei die erste Kaskade der Gleichspannungs-Versorgungseinheiten positive Gleichspannungen mit vordefinierten positiven Gleichspannungspegeln ausgibt, die zweite Kaskade der Gleichspannungs-Versorgungseinheiten negative Gleichspannungen mit vordefinierten negativen Gleichspannungspegeln ausgibt, die Summationseinheit (SUM) zum Aufsummieren von jeweils dem höchsten positiven Gleichspannungspegel, dem niedrigsten positiven Gleichspannungspegeln, dem höchsten negativen Gleichspannungspegel und dem niedrigsten negativen Gleichspannungspegel ausgelegt ist, und die summierten positiven und negativen Gleichspannungen der Fehlerzustands-Erfassungsschaltung (FAIL) von der Summationseinheit (SUM) zugeführt werden, wobei die Fehlererfassungsschaltung (FAIL) einen Fehlerzustand erfasst, wenn sich die summierten positiven und negativen Spannungen von einem vordefinierten Gleichspannungs-Schwellenpegel um mehr als eine vorbestimmte Toleranz unterscheiden.

9. Gleichstrom-Energieversorgungseinheit (PSU) nach Anspruch 8,

   **dadurch gekennzeichnet, dass**

   die Fehlererfassungseinheit nur den Fehlerzustand erfasst, wenn sich die aufsummierte Spannung von der Schwellenspannung länger als eine Zeitperiode unterscheidet, die Transienten in dem Schaltkreis der Gleichspannungs-Energieversorgungseinheit (PSU) oder der elektrischen Vorrichtung überschreitet.

10. Gleichspannungs-Versorgungseinheit (PSU) nach Anspruch 8,

    **gekennzeichnet durch**

    eine Signalkonditioniereinheit, die zwischen den Summationseinheiten und der Fehlerzustands-Erfassungseinheit bereitgestellt ist.

11. Elektrische Vorrichtung, umfassend:

    a) eine Gleichstrom-Energieversorgungseinheit (PSU) nach einem oder mehreren der Ansprüche 1-10;

    b) einen elektronischen Schaltkreis, der eine Mehrzahl von Schaltungsabschnitten einschließt, die jeweils von einer bestimmten der Gleichspannungen getrieben werden, die von den Gleichspannungsversorgungs-Untereinheiten (VR1, VRP) ausgegeben werden; wobei

    c) die Fehlererfassungseinheit (FAIL) als einen Fehlerzustand einen Kurschluss in einem elektrischen Pfad in einem oder mehreren der Schaltungsabschnitte an dem Eingang oder Ausgang einer Gleichspannungsversorgungs-Untereinheit (VR1; VRP) erfasst.

**12.** Elektrische Vorrichtung nach Anspruch 11, **gekennzeichnet durch** eine Bereitschaftsmodus-Steuereinheit (MIC1) zum Umschalten eines Betriebsmodus der elektrischen Vorrichtung in einen Bereitschaftsmodus, wenn die Fehlererfassungseinheit einen Fehlerzustand erfasst.

**13.** Elektrische Vorrichtung nach Anspruch 11, **dadurch gekennzeichnet, dass** die elektrische Vorrichtung einen TV-Empfänger, ein DVD-Wiedergabegerät, ein DVB-Wiedergabegerät, einen PC-Monitor oder ein Videokassetten-Wiedergabegerät umfasst.

## Revendications

**1.** Unité d'alimentation en courant continu (DC) (PSU) fournissant une tension continue pour un appareil électrique et ayant une fonction de détection d'état de défaut, comprenant :

a1) au moins une première cascade d'une pluralité de sous-unités d'alimentation en tension continue (PSUB) connectées en cascade, chacune sortant une tension continue à un niveau de tension continue prédéfini ;

a2) lesdites sous-unités d'alimentation en tension continue connectées en cascade étant conçues de sorte que la première sous-unité d'alimentation en tension continue de ladite connexion en cascade sort la tension continue avec le niveau de tension continue le plus élevé, les sous-unités d'alimentation en tension continue suivantes de ladite connexion en cascade sortent des tensions continues avec respectivement des niveaux de tension continue diminuant successivement et la dernière sous-unité d'alimentation en tension continue de ladite connexion en cascade sort la tension continue avec le niveau de tension continue le plus bas ;

b) au moins une unité de sommation (SUM) pour faire la sommation du niveau de tension continue le plus élevé et du niveau de tension continue le plus bas ; et

c) une unité de détection d'état de défaut (FAIL) pour détecter un état de défaut si ladite tension continue sommée diffère d'un niveau de tension continue de seuil prédéfini de plus d'une tension de tolérance prédéterminée.

**2.** Unité d'alimentation en courant continu (PSU) selon la revendication 1, **caractérisée en ce que** ladite unité de détection de défaut détecte seulement ledit état de défaut si ladite tension sommée diffère de ladite tension de seuil plus longtemps qu'une période de temps dépassant des transitoires dans les circuits de ladite unité d'alimentation en courant continu (PSU) ou de l'appareil électrique.

**3.** Unité d'alimentation en courant continu (PSU) selon la revendication 1, **caractérisée en ce que** la première desdites sous-unités d'alimentation en tension continue connectées en cascade reçoit une tension alternative (AC) en provenance d'une source de tension alternative (ACS) au niveau d'une entrée de cette dernière.

**4.** Unité d'alimentation en courant continu (PSU) selon la revendication 2, **caractérisée en ce que** ladite unité de détection de défaut (FAIL) détecte en tant qu'état de défaut un court-circuit dans un chemin électrique au niveau de l'entrée ou de la sortie d'une sous-unité d'alimentation en tension continue (VR1 ; VRP) ou un court-circuit dans au moins un des enroulements primaires d'un transformateur en courant alternatif (TR1, TR2) de ladite source de tension alternative (ACS).

**5.** Unité d'alimentation en courant continu (PSU) selon la revendication 1, **caractérisée en ce que** lesdites sous-unités d'alimentation en tension continue comprennent chacune un régulateur de tension continue (VR1 ; VRP).

**6.** Unité d'alimentation en tension continue (PSU) selon la revendication 1, **caractérisée en ce que** ladite première unité de ladite pluralité de sous-unités d'alimentation en tension continue comprend une diode (D1) et un condensateur (C1).

**7.** Unité d'alimentation en tension continue (PSU) selon la revendication 2, **caractérisée en ce que** ladite source de tension alternative (ACS) comprend un transformateur (TR1, TR2) dont le côté secondaire fournit ladite tension alternative à ladite première sous-unité d'alimentation en tension continue (PSUB1).

**8.** Unité d'alimentation en tension continue (PSU) selon une ou plusieurs des revendications 1 à 7, **caractérisée par** deux cascades de sous-unités d'alimentation en tension continue connectées en cascade (PSSUB), chacune étant constituée comme dans une ou plusieurs des revendications 1 à 5, dans laquelle ladite première cascade d'unités d'alimentation en tension continue sort des tensions continues positives avec des niveaux de tension continue positive prédéfinis, ladite seconde cascade d'unités d'alimentation en tension continue sort des tensions continues négatives avec des niveaux de tension continue négative prédéfinis, ladite unité de sommation (SUM) est conçue pour sommer respectivement le niveau de tension continue positive le plus élevé, le niveau de tension continue positive le plus bas, le niveau de tension continue négative le plus élevé et le niveau de tension continue négative le plus bas, et lesdites tensions continues positives et négatives sommées sont fournies par ladite unité de sommation (SUM) audit circuit de détection d'état de défaut (FAIL), ledit circuit de détection de défaut (FAIL) détectant un état de défaut si lesdites tensions positives et négatives sommées diffèrent d'un niveau de seuil de tension continue prédéfini de plus d'une tolérance prédéterminée.

**9.** Unité d'alimentation en courant continu (PSU) selon la revendication 8, **caractérisée en ce que** ladite unité de détection de défaut détecte seulement ledit état de défaut si ladite tension sommée diffère de ladite tension de seuil plus longtemps qu'une période de temps dépassant des transitoires dans les circuits de ladite unité d'alimentation en courant continu (PSU) ou de l'appareil électrique.

**10.** Unité d'alimentation en tension continue (PSU) selon la revendication 8, **caractérisée par** un conditionneur de signal disposé entre les unités de sommation et l'unité de détection d'état de défaut.

**11.** Appareil électrique, comprenant :

a) une unité d'alimentation en courant continu (PSU) selon une ou plusieurs des revendications 1 à 10 ;
b) des circuits électroniques comprenant une pluralité de parties de circuit, chacune commandée par une tension particulière desdites tensions continues sorties par lesdites sous-unités d'alimentation en tension continue (VR1, VRP) ; dans lequel
c) ladite unité de détection de défaut (FAIL) détecte en tant qu'état de défaut un court-circuit dans un chemin électrique dans une ou plusieurs des parties de circuit au niveau de l'entrée ou de la sortie d'une sous-unité d'alimentation en tension continue (VR1 ; VRP).

**12.** Appareil électrique selon la revendication 11, **caractérisé par** une unité de commande de mode d'attente (MIC1) pour commuter un mode de fonctionnement dudit appareil électrique à un mode d'attente quand ladite unité de détection de défaut détecte un état de défaut.

**13.** Appareil électrique selon la revendication 11, **caractérisé en ce que** ledit appareil électrique est un récepteur TV, un lecteur de DVD, un récepteur DVB, un écran de PC ou un lecteur de Vidéocassette.

Prior Art

PSU

ACS — AC Source

$I_{AC}$

ADC — AC/DC Converter

$I_{DC}$

LS — Load (Electronic Circuitry)

Fig 1

Prior Art

A'
PW1
B'
PW2
C'
PWX
D'

TR1

D2 — FR2
D1 — FR1
$I_1$

V1 — C1

Load (Electronic Circuitry) — LS

$I_2$

C2

VR1 — V2

$I_C$ — FR3 — T1 — LS'

Fig 2

Fig 3

Fig 4a

Fig 4b

EP 1 378 980 B1

Fig 5a

Fig 5b

EP 1 378 980 B1

Fig 5c

EP 1 378 980 B1